(19) 

Europäisches
Patentamt
European
Patent Office
Office européen
des brevets

(11)　**EP 4 036 603 A1**

(12)　# EUROPEAN PATENT APPLICATION

(43) Date of publication:
　　**03.08.2022　Bulletin 2022/31**

(21) Application number: **22152885.4**

(22) Date of filing: **24.01.2022**

(51) International Patent Classification (IPC):
　　***G01S 17/36*** *(2006.01)*　　***G01S 7/4915*** *(2020.01)*
　　***G01S 7/497*** *(2006.01)*　　***G01S 7/493*** *(2006.01)*
　　***G01S 7/4912*** *(2020.01)*

(52) Cooperative Patent Classification (CPC):
　　**G01S 7/4918; G01S 7/4915; G01S 7/493;**
　　**G01S 7/497; G01S 17/36**

(84) Designated Contracting States:
　　**AL AT BE BG CH CY CZ DE DK EE ES FI FR GB**
　　**GR HR HU IE IS IT LI LT LU LV MC MK MT NL NO**
　　**PL PT RO RS SE SI SK SM TR**
　　Designated Extension States:
　　**BA ME**
　　Designated Validation States:
　　**KH MA MD TN**

(30) Priority:　**29.01.2021　JP 2021013734**

(71) Applicant: **TOPCON CORPORATION**
　　**Tokyo 174-8580 (JP)**

(72) Inventor: **AOKI, Yasutoshi**
　　**Itabashi-ku, 174-8580 (JP)**

(74) Representative: **dompatent von Kreisler Selting**
　　**Werner -**
　　**Partnerschaft von Patent- und Rechtsanwälten**
　　**mbB**
　　**Deichmannhaus am Dom**
　　**Bahnhofsvorplatz 1**
　　**50667 Köln (DE)**

(54)　**ELECTRO-OPTICAL DISTANCE METER AND DISTANCE CALCULATION METHOD**

(57)　[Object] Provided is an electro-optical distance meter in which an error in a distance value caused by noise is reduced without specially devising components and wirings.

　[Solution Means] An electro-optical distance meter 100 includes a light transmitting unit 10 configured to emit distance-measuring light along a collimation axis toward a measuring object; a light receiving unit 20 including a light receiving element 22 configured to receive reflected distance-measuring light and convert the reflected dis-
tance-measuring light into a distance-measuring signal, and a received light amount adjuster 21 configured to adjust a light amount entering the light receiving element 22; an arithmetic control unit 40; and a storage unit 50, and calculates a true distance-measuring signal by subtracting an optical noise signal stored in advance in the storage unit 50 and an electrical noise signal measured before a distance measurement from the distance-measuring signal, and calculates a distance to the measuring object based on the true distance-measuring signal.

FIG. 1

**Description**

Technical Field

The present invention relates to an electro-optical distance meter, specifically, to a phase difference system electro-optical distance meter which measures a distance to a target by emitting distance-measuring light to the target and receiving the distance-measuring light reflected by the target, and a distance calculation method for the electro-optical distance meter.

Background Art

Conventionally, as an electro-optical distance meter that measures a distance to a target by emitting distance-measuring light to the target and receiving the distance-measuring light reflected by the target, the one disclosed in Patent Literature 1 is known.

In the electro-optical distance meter, in some cases, a reference signal and noise generated from various electronic circuits enter a circuit of a light receiving unit side due to electrostatic coupling, electromagnetic coupling, and electromagnetic radiation, etc., without reciprocating to a target, and cause electrical noise, and as a result, an error occurs in a distance value. In the electro-optical distance meter of Patent Literature 1, before a distance measurement, (1) in a state where a diaphragm just before a light receiving element is narrowed most, (2) a light source is caused to emit light, and (3) a multiplication factor of the light receiving element is controlled to a proper value, noise is measured, and an amplitude and an initial phase of the noise are obtained and stored in a storage unit, and at the time of the distance measurement, based on these amplitude and initial phase, a distance from which an error caused by the noise has been removed is calculated (refer to Paragraph [0045]). Accordingly, errors can be reduced without devising components and wirings.

Citation List

Patent Literature

Patent Literature 1 Japanese Published Unexamined Patent Application No. 2009-258006

Summary of Invention

Technical Problem

However, noise that causes an error in a distance value in an electro-optical distance meter includes not only electrical noise but also optical noise caused by entrance of the distance-measuring light into the light receiving element after the distance-measuring light is reflected inside the electro-optical distance meter. In the electro-optical distance meter disclosed in Patent Literature 1, optical noise reduction is not considered.

The present invention has been made in view of these circumstances, and an object thereof is to provide an electro-optical distance meter and a distance calculation method, in which an error in a distance value caused by noise is further reduced without specially devising components and wirings.

Solution to Problem

In order to achieve the object described above, an electro-optical distance meter according to an aspect of the present invention includes: a light source configured to emit distance-measuring light to a measuring object; a light receiving unit including a light receiving element configured to receive the distance-measuring light reflected by the measuring object and convert the received distance-measuring light into a distance-measuring signal, and a received light amount adjuster configured to adjust a light amount entering the light receiving element; an objective lens configured to condense the reflected distance-measuring light to the light receiving unit; an arithmetic control unit configured to calculate a distance to the measuring object from an initial phase of the distance-measuring signal; and a storage unit configured to store the distance-measuring signal and distance value data, wherein before a distance measurement, the arithmetic control unit stores an average amplitude and an initial phase of a noise signal measured by (1) putting the received light amount adjuster into a state where the received light amount adjuster completely blocks light, (2) causing the light source to emit light, and (3) setting a multiplication factor of the light receiving element to an optimum value, as electrical noise in the storage unit, and at the time of a distance measurement, the arithmetic control unit subtracts the electrical noise and optical noise stored in advance as an average amplitude and an initial phase in the storage unit from the measured distance-measuring signal to obtain a true distance-measuring signal, and calculates a distance to the measuring object based on an initial phase of the true distance-measuring signal.

In the aspect described above, it is also preferable that the optical noise is obtained by subtracting, from a noise signal measured under the condition (0) that the reflected distance measuring light does not enter the objective lens by (1a) putting the received light amount adjuster into a state where the received light amount adjuster transmits light most, (2) causing the light source to emit light, and (3) setting a multiplication factor of the light receiving element to an optimum value, a noise signal measured under the same condition (0) that the reflected distance measuring light does not enter the objective lens by (1) putting the received light amount adjuster into a state where the received light amount adjuster completely blocks light, (2) causing the light source to emit light, and (3) setting a multiplication factor of the light receiving element to an optimum value.

In the aspect described above, the condition that the reflected distance-measuring light does not enter the objective lens may be emitting distance-measuring light toward the night sky without obstacles.

In the aspect described above, it is also preferable that the optical noise is stored in the storage unit when an average amplitude and an initial phase of a noise signal obtained by subtracting, from a noise signal measured under the condition (0) that the reflected distance measuring light does not enter the objective lens by (1a) putting the received light amount adjuster into a state where the received light amount adjuster transmits light most, (2) causing the light source to emit light, and (3) setting a multiplication factor of the light receiving element to an optimum value, a noise signal measured under the same condition (0) that the reflected distance measuring light does not enter the objective lens by (1) putting the received light amount adjuster into a state where the received light amount adjuster completely blocks light, (2) causing the light source to emit light, and (3) setting a multiplication factor of the light receiving element to an optimum value, are less than predetermined thresholds.

In the aspect described above, it is also preferable that the optical noise is stored in the storage unit when an average amplitude and an initial phase of a noise signal obtained from the noise signal measured under the condition (0) that the reflected distance measuring light does not enter the objective lens by (1) putting the received light amount adjuster into a state where the received light amount adjuster completely blocks light, (2) causing the light source to emit light, and (3) setting a multiplication factor of the light receiving element to an optimum value, are less predetermined thresholds.

A distance calculation method according to another aspect of the present invention is a distance calculation method using an electro-optical distance meter including: a light source configured to emit distance-measuring light to a measuring object; a light receiving unit including a light receiving element configured to receive the distance-measuring light reflected by the measuring object and convert the received distance-measuring light into a distance-measuring signal, and a received light amount adjuster configured to adjust a light amount entering the light receiving element; an objective lens configured to condense the reflected distance-measuring light to the light receiving unit; an arithmetic control unit configured to calculate a distance to the measuring object from an initial phase of the distance-measuring signal; and a storage unit configured to store the distance-measuring signal and distance value data, wherein before a distance measurement, the arithmetic control unit stores an average amplitude and an initial phase obtained by measuring a noise signal by (1) putting the received light amount adjuster into a state where the received light amount adjuster completely blocks light, (2) causing the light source to emit light, and (3) setting a multiplication factor of the light receiving element to an optimum value, as electrical noise in the storage unit, and at the time of the distance measurement, the arithmetic control unit subtracts the electrical noise and optical noise stored in advance as an average amplitude and an initial phase in the storage unit from the measured distance-measuring signal to obtain a true distance-measuring signal, and calculates a distance to the measuring object based on an initial phase of the true distance-measuring signal.

Benefit of Invention

According to the aspects described above, an electro-optical distance meter and a distance calculation method, in which an error in a distance value caused by noise is further reduced without specially devising components and wirings can be provided.

Brief Description of Drawings

FIG. 1 is a block diagram of an electro-optical distance meter according to an embodiment of the present invention.
FIG. 2 is a view illustrating an example of a received light amount adjuster of the electro-optical distance meter.
FIG. 3A is a diagram illustrating sampling data of a distance-measuring signal of the electro-optical distance meter, and FIG. 3B is a diagram illustrating synchronous addition data of the distance-measuring signal.
FIG. 4 is a diagram illustrating a relationship among distance signal vectors and noise signal vectors in the electro-optical distance meter.

FIGS. 5A and 5B are views describing examples of noise measurement methods in the electro-optical distance meter, FIG. 5A describes a method for measuring an electrical noise signal, and FIG. 5B describes a method for measuring an optical noise signal.

FIG. 6 is a diagram describing a method for calculating an average amplitude and an initial phase of an optical noise signal, and an initial phase of a true distance-measuring signal in the electro-optical distance meter.

FIG. 7 is a flowchart of processing before factory shipment in the electro-optical distance meter.

FIG. 8 is a flowchart of processing at the time of a distance measurement in the electro-optical distance meter.

FIG. 9 is a flowchart of processing before factory shipment in an electro-optical distance meter according to a modification of the embodiment.

Description of Embodiments

Hereinafter, preferred embodiments of the present invention will be described with reference to the drawings, however, the present invention is not limited to these. In each embodiment, the same components are provided with the same reference sign, and overlapping description will be omitted.

(Embodiments)

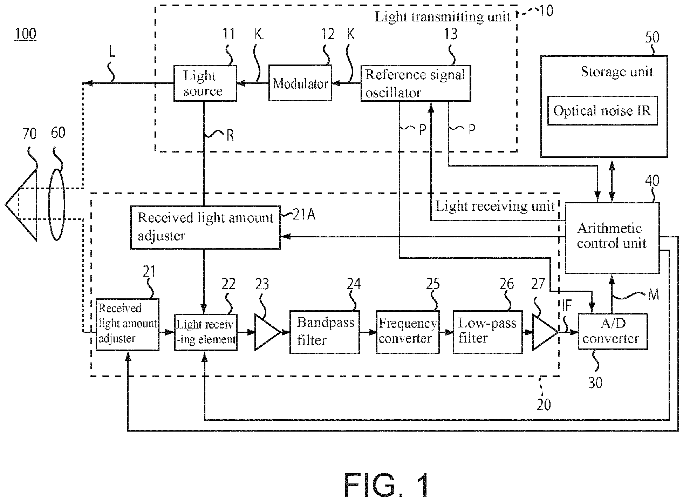

An electro-optical distance meter 100 according to the present embodiment is a so-called phase difference system electro-optical distance meter. As illustrated in FIG. 1, generally, the electro-optical distance meter includes a light transmitting unit 10, a light receiving unit 20, an A/D (Analog/Digital) converter 30, an arithmetic control unit 40, a storage unit 50, and an objective lens 60, and these are housed in a housing configured as a telescope.

The light transmitting unit 10 includes a light source 11, a light transmitting optical system (not illustrated), a modulator 12, and a reference signal oscillator 13. The light source 11 is, for example, a light emitting element such as a laser diode, and emits distance-measuring light L along a collimation axis toward a target 70 such as a prism placed on a survey point through the light transmitting optical system and an objective lens. The light source 11 is connected to the modulator 12, and the modulator 12 is connected to the reference signal oscillator 13. The reference signal oscillator 13 generates a reference signal K with a constant frequency. The modulator 12 modulates the reference signal K to a modulated signal $K_1$.

The light receiving unit 20 includes a light receiving optical system (not illustrated), received light amount adjuster 21, 21A, a light receiving element 22, a high frequency amplifier 23, a bandpass filter 24, a frequency converter 25, and a low-pass filter 26.

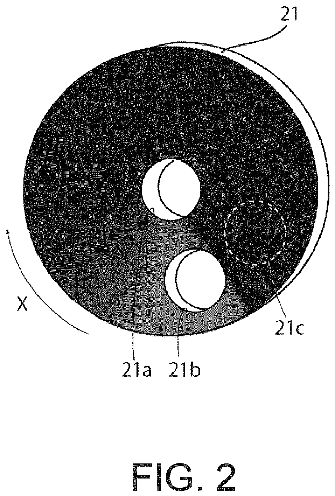

The received light amount adjuster 21 is a means that is disposed just before the light receiving element 22 and adjusts an amount of light entering the light receiving element. The received light amount adjuster 21 is, for example, a variable density filter composed of a thin discoid film as illustrated in FIG. 2.

The received light amount adjuster 21 in FIG. 2 has a central hole 21a at a central portion, and has an opening 21b around the central hole 21a, and is formed so that a filter density continuously increases from 0% to 100% in terms of light intensity decay rate in the circumferential direction represented by arrow X in FIG. 2 from the opening 21b toward the other end portion region 21c in the circumferential direction. The received light amount adjuster 21 is rotated by a rotary shaft (not illustrated) of a motor inserted through the central hole 21a.

The received light amount adjuster 21 is configured so that the light intensity decay rate reaches 0% (a state where light is transmitted most) when the opening 21b reaches a position matching the light receiving element 22, and reaches 100% (a state where light is completely blocked) when the other end portion region 21c reaches a position matching the light receiving element 22. By controlling rotation of the motor by the arithmetic control unit 40, the received light amount adjuster 21 (filter) is controlled to open or close.

The received light amount adjuster 21 is not limited to the above-described variable density filter, and a publicly known diaphragm to be used for an electro-optical distance meter can be used.

The light receiving element 22 is, for example, an avalanche photodiode (APD), etc., and a bias voltage to be applied to the light receiving element 22 can be controlled by a reverse voltage control unit not illustrated. The reverse voltage control unit changes the bias voltage according to a command from the arithmetic control unit 40, and controls the light receiving element 22 to a proper multiplication factor according to a surrounding brightness. The light receiving element 22 receives distance-measuring light L reflected by the target 70 through the light receiving optical system and the received light amount adjuster 21, and converts the received distance-measuring light into a distance-measuring signal as an electric signal.

The electric signal is amplified by the highfrequency amplifier 23, and then, noise is removed from the signal by the bandpass filter 24.

The frequency converter 25 includes a mixer and a local oscillator. By inputting a local oscillation signal generated by the local oscillator and the distance-measuring signal from which noise has been removed into the mixer and multiplying these, the frequency converter 25 generates a frequency component as a difference in frequency between the signals and a frequency component as a sum of the frequencies of the signals. Here, only the distance-measuring signal converted into an intermediate frequency IF as a difference in frequency between the signals is sorted out by the low-pass filter 26.

The distance-measuring signal converted into the intermediate frequency IF is amplified by an intermediate frequency amplifier 27. The amplified distance-measuring signal is converted into a digital signal by the A/D converter 30, and stored in the storage unit 50 through the arithmetic control unit 40. In the following description, a distance-measuring signal that has been converted into an intermediate frequency IF and converted into a digital signal is referred to as a distance-measuring signal M.

The arithmetic control unit 40 is a processing unit that realizes processing to operate a distance based on a distance-measuring signal M obtained by performing a distance measurement by controlling the light transmitting unit 10 and the light receiving unit 20. As the arithmetic control unit 40, at least one processor, for example, a CPU (Central Processing Unit), etc., can be applied. The function of the arithmetic control unit 40 described hereinafter can be realized by a program or a circuit, or a combination of these. When the function is realized by a program, the function is realized by reading and executing the program stored in the storage unit 50.

In addition, the arithmetic control unit 40 obtains a true distance-measuring signal $M_T$ by removing an optical noise signal IR and an electrical noise signal EL described later from the measured distance-measuring signal M, and calculates a distance value based on an initial phase $\beta_T$ of the true distance-measuring signal $M_T$.

The storage unit 50 is includes a recording medium that stores, saves, and transmits information in a computer-processable format, and includes a so-called main storage device and auxiliary storage device. The storage unit 50 stores sampling data and calculated distance value data. In addition, the storage unit 50 stores an average amplitude $a_{EL}$ and an initial phase $\eta_{EL}$ of the electrical noise signal EL and an average amplitude $a_{IR}$ and an initial phase $\eta_{IR}$ of the optical noise signal IR measured before factory shipment. Also, the storage unit 50 stores programs for realizing functions of the arithmetic control unit 40 and the electro-optical distance meter 100. As the storage unit 50, for example, a nonvolatile memory such as a flash memory or a ROM (Read Only Memory), a volatile memory such as a RAM (Random Access Memory), etc., can be applied.

(Calculation of Theoretical Distance)

First, measurement of a theoretical distance by the electro-optical distance meter 100 will be described. When the electro-optical distance meter 100 performs a distance measurement, the reference signal oscillator 13 transmits a synchronization signal P to the arithmetic control unit 40 and the A/D converter 30, and transmits a reference signal K to the modulator. The A/D converter performs sampling synchronized with the reference signal K. During the distance measurement, a light amount to be transmitted through the received light amount adjuster 21 is fixed.

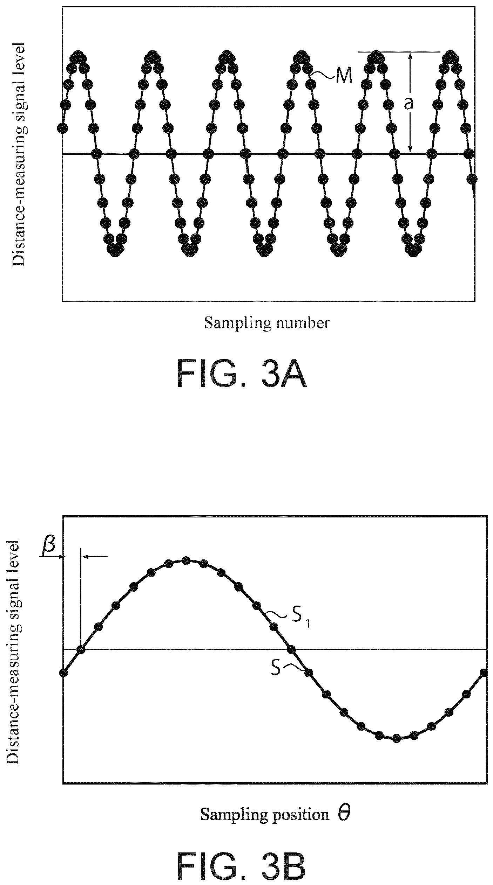

FIG. 3A is a diagram illustrating a state where a digitized distance-measuring signal M is sampled in the electro-optical distance meter 100. A sampling timing of the A/D converter 30 is determined so that one period of the distance-measuring signal M is always sampled at constant phase angle positions, for example, one period is divided equally into a ($a \geq 3$). At these sampling timings, the distance-measuring signal M is successively sampled over multiple periods of thousands of periods or more. At this time, sampling data of the distance-measuring signal M exceeding an input range of the A/D converter 30 or much smaller than the input range is discarded.

In order to store the sampling data in the storage unit 50, a storage area of the storage unit 50 corresponding to N data of one period of the distance-measuring signal M is prepared. N sampling data at the same phase position are synchronously added and stored. In this way, as illustrated in FIG. 3B, synthetic data S of the distance-measuring signal M of one period with a large amplitude obtained by synchronously adding sampling data at the same phase positions is created. This synthetic data S is applied to a synthetic sine wave $S_1$ by the method of least squares, and an initial phase $\beta$ of this synthetic sine wave $S_1$ is obtained. This synthetic sine wave $S_1$ can also be expressed by the following expression:

$$\mathtt{Nasin\ (\theta - \beta)\ +\ Nb\ (Expression\ 1)}$$

(Here, N is the number of distance-measuring signals M added, a is an average amplitude of the distance-measuring signal M, b is a bias level, $\theta$ is coordinates regulating an angle corresponding to a sampling position, and $\beta$ is an initial phase.)

The initial phase $\beta$ becomes equal to a phase difference between a signal obtained by dividing the frequency of the reference signal K to the same frequency as that of the intermediate frequency signal and the distance-measuring signal M. Based on this initial phase $\beta$, a distance D to the target 70 is calculated according to Expression 2.

$$D = (\beta/2\pi)(c/F)(1/2) = (\beta c)/(4\pi F) \quad \text{(Expression 2)}$$

(Here, $\beta$ is an initial phase, c is light speed, and F is a modulation frequency of the distance-measuring light L.)

It is also possible that the distance-measuring light L is emitted from the light source 11 as reference light R and caused to pass through the received light amount adjuster 21A having the same configuration as that of the received light amount adjuster 21 through the inside of the electro-optical distance meter 100, and guided to the light receiving element 22. At the time of a distance measurement, a measurement value is corrected by a publicly known method based on a result of measurement using the reference light R.

(Calculation of Actual Distance)

However, an actually measured distance-measuring signal includes noise. Noise occurring during a distance measurement includes a reference signal, an electrical noise signal EL generated from various electronic circuits, and an optical noise signal IR generated when a distance-measuring light L emitted from the light source 11 is reflected by the inside of the instrument such as an objective lens and unintentionally enters the light receiving element 22.

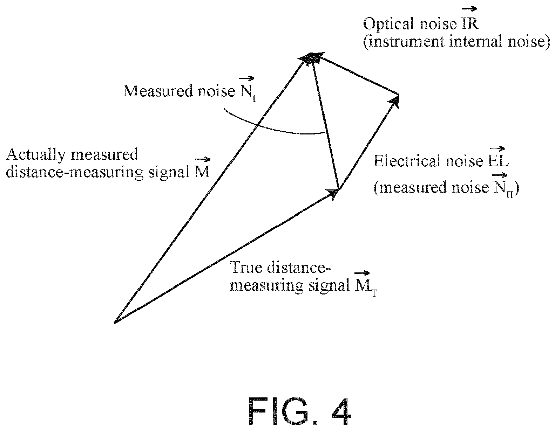

FIG. 4 is a diagram illustrating a relationship among a true distance-measuring signal $M_T$, an actually measured distance-measuring signal M, an optical noise signal IR, and an electrical noise signal EL. As shown in Expression 3, the true distance-measuring signal $M_T$ can be obtained by subtracting the optical noise signal IR and the electrical noise signal EL from the actually measured distance-measuring signal M.

$$\overrightarrow{M_T} = \vec{M} - \left(\overrightarrow{IR} + \overrightarrow{EL}\right) \quad \text{(Expression 3)}$$

Therefore, a method for measuring these optical noise signal IR and electrical noise signal EL will be described.

(Method for Measuring Noise)

An electrical noise signal EL can be measured by activating the electro-optical distance meter 100 under, for example, the following condition I.

[Condition I]

(1) The received light amount adjuster 21 is put into a state where it completely blocks light (transmittance: 0%),
(2) the light source 11 is caused to emit light, and
(3) the bias voltage to be applied to the light receiving element is controlled to an optimum value (that is, a multiplication factor is set to an optimum value).

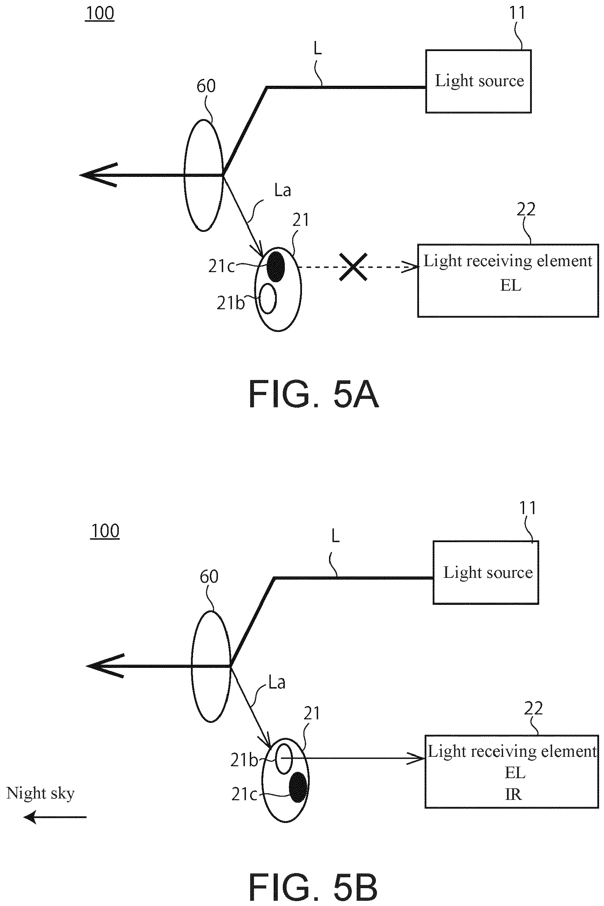

FIG. 5A schematically illustrates a method for measuring electrical noise. When the distance-measuring light L is emitted under the condition I, the distance-measuring light L is emitted through the light transmitting optical system and the objective lens 60. At this time, even when there is reflected distance-measuring light that enters through the objective lens 60 or light La reflected by the inside of the instrument such as the back surface of the objective lens 60, these are blocked by the received light amount adjuster 21 and do not enter the light receiving element 22.So, no signal of incident light is generated. However, the reference signal generated by the reference signal oscillator and other noise generated from various electronic circuits enter circuits after the light receiving element 22 and generate an electrical noise signal EL. Therefore, a noise signal $N_I$ measured under the condition I is an electrical noise signal EL.

On the other hand, an optical noise signal IR can be measured, for example, as follows. For example, a condition (0) that a collimation direction of the electro-optical distance meter 100 is set toward the night sky without obstacles, that is, reflected light of the distance-measuring light L does not enter the objective lens 60 is met, and under the condition II, the electro-optical distance meter 100 is activated to measure the signal.

[Condition II]

(1a) The received light amount adjuster 21 is put into a state where it transmits light most (transmittance: 100%),
(2) the light source 11 is caused to emit light, and
(3) the bias voltage to be applied to the light receiving element 22 is set to an optimum value (that is, a multiplication factor is set to an optimum value).

FIG. 5B schematically illustrates a method for measuring an optical noise signal IR. Under the condition (0), the distance-measuring light L emitted from the light source 11 in the condition II is output toward the night sky without obstacles through the objective lens 60. In the direction toward the night sky, no obstacle that reflects the distance-measuring light L is present, so that the distance-measuring light L is not reflected, and no reflected distance-measuring light enters the objective lens 60. However, a part La of the distance-measuring light L is reflected by the inside of the instrument such as the back surface of the objective lens 60 and advances through the light receiving optical system, and is transmitted through the received light amount adjuster 21 and enters the light receiving element 22. Due to the incident light La, an optical noise signal IR is generated. At this time, in the light receiving element 22, an electrical noise signal EL generated from electronic circuits, etc., is also detected.

As illustrated in FIG. 4, a noise signal $N_{II}$ measured under the condition II has a synthetic vector of the optical noise signal IR and the electrical noise signal EL generated simultaneously. Therefore, the optical noise signal IR is obtained by vectorially subtracting, from the noise signal $N_{II}$ measured under the condition II, the noise signal $N_I$ (that is, the electrical noise signal EL) measured in the condition I under the same condition (0).

(Method for Calculating Distance Value)

Hereinafter, a method for calculating a distance value according to the present embodiment will be described. Noise signals $N_I$ and $N_{II}$ measured under the condition I and the condition II exhibit the same behavior as the distance-measuring signal M illustrated in FIG. 3A. Therefore, when synthetic data and synthetic sine wave of the noise signals $N_I$ and $N_{II}$ are obtained in the same manner as in the case where synthetic data S and synthetic sine wave $S_1$ of the distance-measuring signal M illustrated in FIG. 3B are obtained, a synthetic sine wave of the noise signals is expressed by the general expression of Expression 4:

$$\mathrm{Na \cdot sin(\theta - \eta) + Nb} \quad \text{(Expression 4)}$$

(Here, N is the number of noise waves added, a is an average amplitude of noise, b is a bias level, $\eta$ is an initial phase, and $\theta$ is coordinates regulating an angle corresponding to a sampling position.)
Therefore, one wave of the noise signal $N_I$ measured by activating the electro-optical distance meter 100 under the condition I is expressed by the following Expression 5:

$$\mathrm{a_I \cdot sin(\theta - \eta_I) + b_I} \quad \text{(Expression 5)}$$

(Here, $a_I$ is an average amplitude of the noise signal $N_I$, $\eta_I$ is an initial phase of the noise signal, and $b_I$ is a bias level.)
One wave of the noise signal $N_{II}$ measured by activating the electro-optical distance meter 100 under the condition II is expressed by the following Expression 6:

$$\mathrm{a_{II} \cdot sin(\theta - \eta_{II}) + b_{II}} \quad \text{(Expression 6)}$$

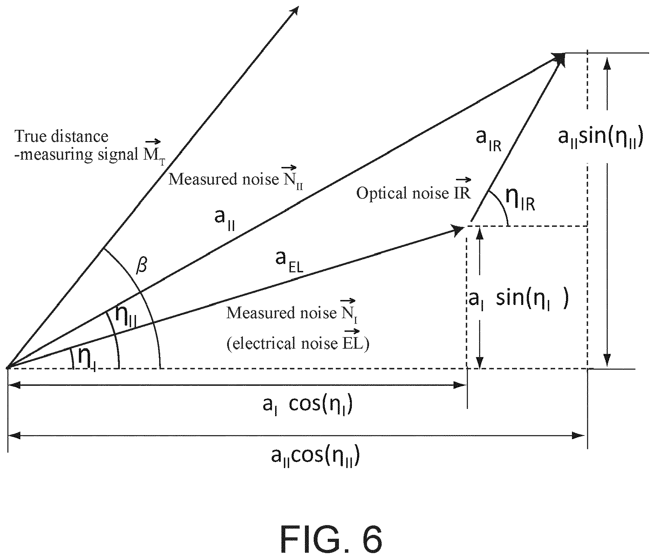

(Here, $a_{II}$ is an average amplitude of the noise signal $N_{II}$, $\eta_{II}$ is an initial phase of the noise signal, and $b_{II}$ is a bias level.)
The noise signal $N_{II}$ measured under the condition II is a synthetic noise signal of an electrical noise signal EL and an optical noise signal IR, and is expressed vectorially as illustrated in FIG. 6.
The noise signal $N_I$ measured under the condition I is an electrical noise signal EL. Therefore, an average amplitude $a_{EL}$ and an initial phase $\eta_{EL}$ of the electrical noise signal EL are respectively obtained as $a_{EL} = a_I$ and $\eta_{EL} = \eta_I$.
Therefore, from FIG. 6, an average amplitude $a_{IR}$ and an initial phase $\eta_{IR}$ of an optical noise signal IR can be respectively expressed by the following Expression 7 and Expression 8.

$$a_{IR} = \sqrt{\{a_{II}\sin(\eta_{II}) - a_I\sin(\eta_I)\}^2 + \{a_{II}\cos(\eta_{II}) - a_I\cos(\eta_I)\}^2} \quad \text{(Expression 7)}$$

(Here, $a_{II}$ is an average amplitude of the noise signal $N_{II}$ and $\eta_{II}$ is an initial phase of the noise signal, and $a_I$ is an average amplitude of the noise signal $N_I$ and $\eta_I$ is an initial phase of the noise signal.)

$$\eta_{IR} = \tan^{-1}\{a_{II}\sin(\eta_{II}) - a_I\sin(\eta_I)\} \ / \ \{a_{II}\cos(\eta_{II}) - a_I\cos(\eta_I)\} \ \} \quad \text{(Expression 8)}$$

(Here, $a_{II}$ is an average amplitude of the noise signal $N_{II}$ and $\eta_{II}$ is an initial phase of the noise signal, and $a_I$ is an average amplitude of the noise signal $N_I$ and $\eta_I$ is an initial phase of the noise signal.)

The distance-measuring signal M obtained at the time of a distance measurement is expressed by Expression 1, however, this Expression 1 includes noise signals (optical noise signal IR and electrical noise signal EL). Therefore, an initial phase $\beta_T$ of a true distance-measuring signal $M_T$ from which the noises have been removed from Expression 1 can be obtained from the following Expression 9.

$$\beta_T = \tan^{-1}\{A\sin(\beta) - a_{EL}\sin(\eta_{EL}) - a_{IR}\sin(\eta_{IR})\} / \{A\cos(\beta) - a_{EL}\cos(\eta_{EL}) - a_{IR}\cos(\eta_{IR})\}\} \quad \text{(Expression 9)}$$

(Here, A is an average amplitude of the distance-measuring signal M, $\beta$ is an initial phase of the distance-measuring signal M, $a_{EL}$ is an average amplitude of the electrical noise signal, $\eta_{EL}$ is an initial phase of the electrical noise signal, $a_{IR}$ is an average amplitude of the optical noise signal IR, and $\eta_{IR}$ is an initial phase of the optical noise signal.)

Therefore, by Expression 10 obtained by replacing $\beta$ in Expression 2 with $\beta_T$ in Expression 9, a distance $D_T$ from which an error caused by noises has been removed can be obtained.

$$D_T \ = \ (\beta_T c) / (4\pi F) \quad \text{(Expression 10)}$$

In this way, the initial phase $\beta_T$ of the true distance-measuring signal $M_T$ from which noises have been removed can be calculated by using the average amplitude $a_{EL}$ and the initial phase $\eta_{EL}$ of the electrical noise signal EL, and the average amplitude $a_{IR}$ and the initial phase $\eta_{IR}$ of the optical noise signal IR, included in the distance-measuring signal M.

(Operation of Electro-Optical Distance Meter)

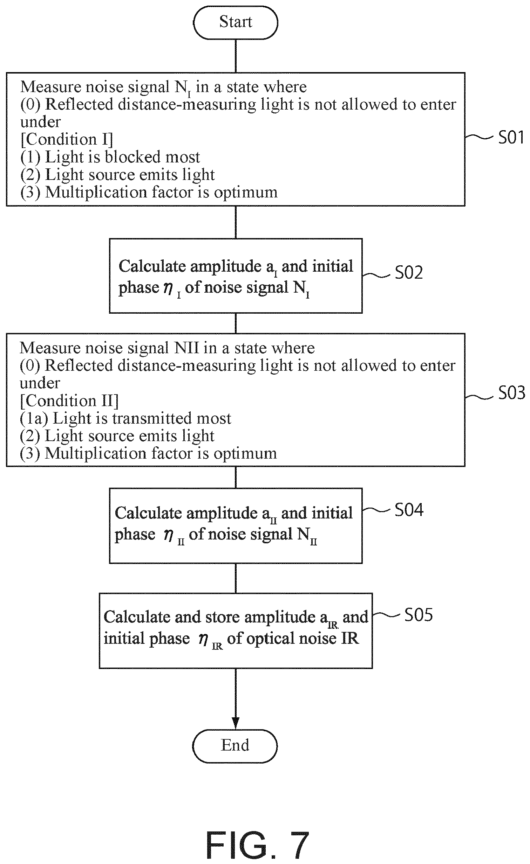

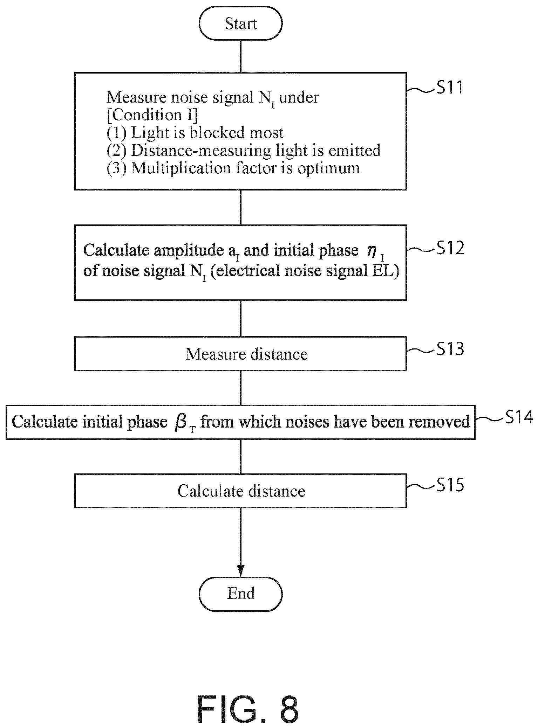

In the electro-optical distance meter 100 according to the present embodiment, an example of steps for obtaining the distance $D_T$ will be described with reference to the flowcharts of FIGS. 7 and 8. FIGS. 7 and 8 are respectively flowcharts of operation before factory shipment and at the time of a distance measurement.

As illustrated in FIG. 7, before factory shipment, first, in Step S01, in a state where the electro-optical distance meter 100 is directed toward the night sky (no reflected distance measuring light is allowed to enter), under the condition I, the arithmetic control unit 40 activates the electro-optical distance meter 100 to measure a noise signal $N_I$. Here, directing toward the night sky is for meeting the same condition as in Step S03.

Next, in Step S02, the arithmetic control unit 40 calculates an average amplitude $a_I$ and an initial phase $\eta_I$ of the noise signal $N_I$, and stores these in the storage unit 50.

Next, in Step S03, under the condition II described above, the arithmetic control unit 40 activates the electro-optical distance meter 100 to measure a noise signal $N_{II}$.

Next, in Step S04, the arithmetic control unit 40 calculates an average amplitude $a_{II}$ and an initial phase $\eta_{II}$ of the noise signal $N_{II}$, and stores these in the storage unit 50.

Next, in Step S05, by using the average amplitude $a_I$ and the initial phase $\eta_I$ calculated in Step S02 and the average amplitude $a_{II}$ and the initial phase $\eta_{II}$ calculated in Step S04, the arithmetic control unit 40 calculates an average amplitude $a_{IR}$ and an initial phase $\eta_{IR}$ of the optical noise signal IR, and stores these in the storage unit 50.

The average amplitude $a_I$ and the initial phase $\eta_I$ calculated and stored in Step S02 and the average amplitude $a_{II}$ and the initial phase $\eta_{II}$ calculated and stored in Step S04 may be discarded or may be retained (stored) after being used for calculation of the average amplitude $a_{IR}$ and the initial phase $\eta_{IR}$ of the optical noise in Step S05.

Next, at the time of a distance measurement, first, collimation to a measuring object (for example, a target) is performed, and then the operation illustrated in FIG. 8 is executed. That is, in Step S11, under the condition I, the arithmetic control unit 40 activates the electro-optical distance meter 100 to measure a noise signal $N_I$.

Next, in Step S12, the arithmetic control unit 40 calculates an average amplitude $a_I$ and an initial phase $\eta_I$ of the noise signal $N_I$ as an electrical noise signal EL, and stores these in the storage unit 50 as an average amplitude $a_{EL}$ and an initial phase $\eta_{EL}$ of the electrical noise signal EL.

Next, in Step S13, the arithmetic control unit 40 activates the electro-optical distance meter 100 and properly adjusts the received light amount adjuster 21, emits distance-measuring light, sets the multiplication factor of the light receiving element to a proper value, and measures a distance-measuring signal M based on the reflected distance-measuring light L.

Next, in Step S14, the arithmetic control unit 40 obtains an average amplitude A and an initial phase $\beta$ of the measured distance-measuring signal M, and based on these, calculates an initial phase $\beta_T$ of a true distance-measuring signal $M_T$ from which the electrical noise signal EL calculated in Step S12 and the optical noise signal IR stored in Step S05 have been removed.

Next, in Step S15, from the initial phase $\beta_T$ calculated in Step S14, the arithmetic control unit 40 calculates a distance $D_T$ from which an error caused by the noises has been removed according to Expression 10, and ends the processing.

In this way, the electro-optical distance meter 100 according to the present embodiment is configured to calculate a distance value from a true distance-measuring signal $M_T$ obtained by vectorially subtracting an optical noise signal IR and an electrical noise signal EL from the distance-measuring signal M, so that an error in a distance value caused by noise can be reduced without specially devising components and wirings.

Concerning an optical noise signal IR, it is not possible to directly measure only the optical noise signal IR, and in an attempt to measure the optical noise signal IR, it is measured while including an electrical noise signal EL. Since the optical noise signal IR depends on the mechanical structure, it takes a value unique to the electro-optical distance meter 100, and once the value is measured, it does not fluctuate. On the other hand, an electrical noise signal EL greatly fluctuates due to environmental changes such as changes in surrounding temperature and power supply (battery) voltage, and mechanical deterioration caused by aging. Therefore, in the present embodiment, before factory shipment, in a condition (0) that the reflected distance-measuring light does not enter the objective lens 60, a noise signal $N_I$ corresponding to an electrical noise signal EL, and a noise signal $N_{II}$ as a synthetic noise signal of the electrical noise signal EL and an optical noise signal IR, are measured as a series of operation under the conditions I and II, and the optical noise signal IR is calculated and stored in advance in the storage unit 50. In addition, the electro-optical distance meter 100 is configured to measure , before a distance measurement, a noise signal $N_I$ under the condition I and calculate an electrical noise signal EL.

According to the configuration described above, an accurate optical noise signal IR can be calculated, so that the accuracy in the distance calculation is improved. In addition, it is not necessary to measure the optical noise signal IR at the time of the distance measurement, so that the time from the distance measurement to calculation can be shortened. Further, according to fluctuation of the electrical noise signal EL, the electrical noise signal EL can be removed, and in this respect as well, a more accurate distance calculation can be performed.

(Modification)

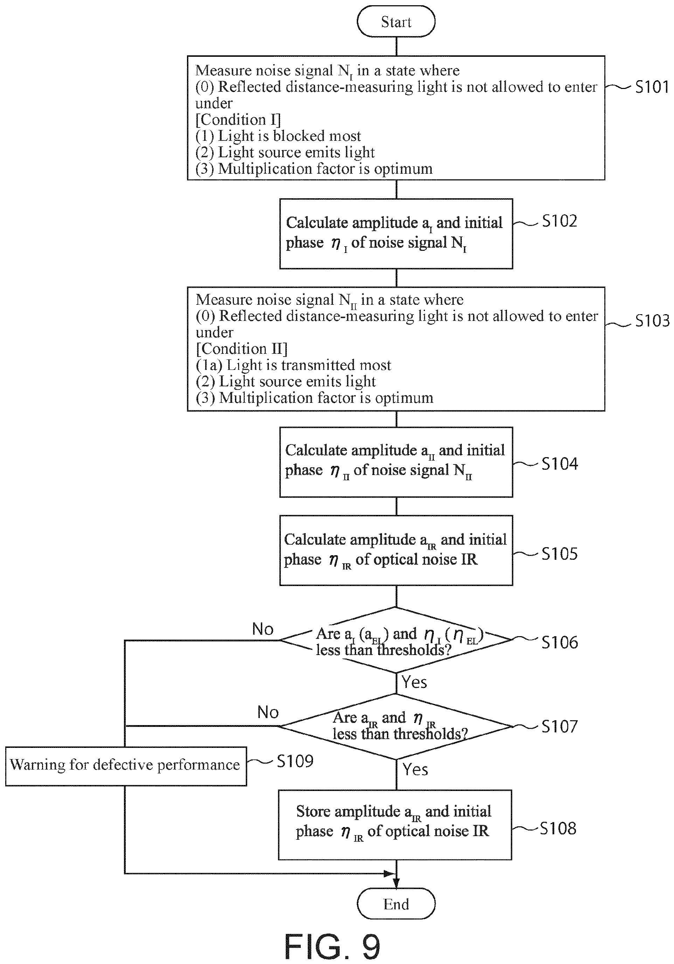

The electro-optical distance meter of the present embodiment can be modified as follows. That is, the electro-optical distance meter may be configured to execute processing illustrated in the flowchart of FIG. 9 in operation before factory shipment.

In this modification, as illustrated in FIG. 9, before factory shipment, in Steps S101 to S104, as in Steps S01 to S04, noise signals $N_I$ and $N_{II}$ are measured, and average amplitudes $a_I$ and $a_{II}$ and initial phases $\eta_I$ and $\eta_{II}$ of the respective noise signals are calculated.

Next, in Step S105, as in Step S05, by using the average amplitudes $a_I$ and $a_{II}$ and initial phases $\eta_I$ and $\eta_{II}$, an average amplitude $a_{IR}$ and an initial phase $\eta_{IR}$ of optical noise IR are calculated.

Next, in Step S106, whether the average amplitude $a_I$ and initial phase $\eta_I$ of the noise signal $N_I$ calculated in Step S102, that is, an average amplitude $a_{EL}$ and an initial phase $\eta_{EL}$ of the electrical noise signal EL are respectively less than predetermined thresholds is determined.

Then, in Step S106, when they are less than the predetermined thresholds (Yes), in Step S107, whether the average amplitude $a_{IR}$ and the initial phase $\eta_{IR}$ of the optical noise IR calculated in Step S105 are respectively less than predetermined thresholds is determined.

Then, in Step S107, when they are less than the predetermined thresholds (Yes), in Step S108, these values are stored in the storage unit 50 and the processing is ended.

On the other hand, in Step S106 or S107, when the values are not less than the predetermined thresholds (No), the arithmetic control unit 40 determines that performance of the electro-optical distance meter 100 is defective, and issues a warning and ends the processing. The warning can be realized by a publicly known means such as display on a display unit (not illustrated) or flashing of an indicator (not illustrated). To the electro-optical distance meter the performance of which has been determined to be defective in Step S109, a proper measure such as component replacement or position adjustment, etc., is applied.

In this way, by using noise signals to be used for registration of an optical noise signal, basic performance can be inspected at the same time, so that without conducting a test accompanied by separate measurements, performance of the electro-optical distance meter to be shipped can be secured.

Preferred embodiments of the present invention have been described above, and the embodiments described above are examples of the present invention, and these can be combined based on knowledge of those skilled in the art, and such a combined embodiment is also included in the scope of the present invention.

Reference Signs List

| | |
|---|---|
| 10: | Light transmitting unit |
| 20: | Light receiving unit |
| 21: | Received light amount adjuster |
| 22: | Light receiving element |
| 40: | Arithmetic control unit |
| 50: | Storage unit |
| 52: | Electrical noise |
| 53: | Optical noise |
| 60: | Objective lens |
| 70: | Target |
| 100: | Electro-optical distance meter |

**Claims**

1. An electro-optical distance meter comprising:

   a light source configured to emit distance-measuring light to a measuring object;
   a light receiving unit including a light receiving element configured to receive the distance-measuring light reflected by the measuring object and convert the received distance-measuring light into a distance-measuring signal, and a received light amount adjuster configured to adjust a light amount entering the light receiving element;
   an objective lens configured to condense the reflected distance-measuring light to the light receiving unit;
   an arithmetic control unit configured to calculate a distance to the measuring object from an initial phase of the distance-measuring signal; and
   a storage unit configured to store the distance-measuring signal and distance value data, wherein
   before a distance measurement, the arithmetic control unit stores an average amplitude and an initial phase of a noise signal measured by (1) putting the received light amount adjuster into a state where the received light amount adjuster completely blocks light, (2) causing the light source to emit light, and (3) setting a multiplication factor of the light receiving element to an optimum value, as electrical noise in the storage unit, and
   at the time of a distance measurement, the arithmetic control unit subtracts the electrical noise and optical noise stored in advance as an average amplitude and an initial phase in the storage unit from the measured distance-measuring signal to obtain a true distance-measuring signal, and calculates a distance to the measuring object based on an initial phase of the true distance-measuring signal.

2. The electro-optical distance meter according to Claim 1, wherein

   the optical noise is obtained by subtracting,
   from a noise signal measured under
   the condition (0) that the reflected distance measuring light does not enter the objective lens by
   (1a) putting the received light amount adjuster into a state where the received light amount adjuster transmits light most, (2) causing the light source to emit light, and (3) setting a multiplication factor of the light receiving element to an optimum value,
   a noise signal measured under
   the same condition (0) that the reflected distance measuring light does not enter the objective lens by
   (1) putting the received light amount adjuster into a state where the received light amount adjuster completely blocks light, (2) causing the light source to emit light, and (3) setting a multiplication factor of the light receiving element to an optimum value.

**3.** The electro-optical distance meter according to Claim 2, wherein
the condition that the reflected distance-measuring light does not enter the objective lens is to emit distance-measuring light toward the night sky without obstacles.

**4.** The electro-optical distance meter according to Claim 2, wherein

the optical noise is stored in the storage unit when an average amplitude and an initial phase of a noise signal obtained by subtracting,
from a noise signal measured under
the condition (0) that the reflected distance measuring light does not enter the objective lens by
(1a) putting the received light amount adjuster into a state where the received light amount adjuster transmits light most, (2) causing the light source to emit light, and (3) setting a multiplication factor of the light receiving element to an optimum value,
a noise signal measured under
the same condition (0) that the reflected distance measuring light does not enter the objective lens by
(1) putting the received light amount adjuster into a state where the received light amount adjuster completely blocks light, (2) causing the light source to emit light, and (3) setting a multiplication factor of the light receiving element to an optimum value, are less than predetermined thresholds.

**5.** The electro-optical distance meter according to Claim 4, wherein

the arithmetic control unit determines that performance of the electro-optical distance meter is defective and issues a warning when the average amplitude and the initial phase of the noise signal obtained by subtracting,
from the noise signal measured under
the condition (0) that the reflected distance measuring light does not enter the objective lens by
(1a) putting the received light amount adjuster into a state where the received light amount adjuster transmits light most, (2) causing the light source to emit light, and (3) setting a multiplication factor of the light receiving element to an optimum value,
the noise signal measured under
the same condition (0) that the reflected distance measuring light does not enter the objective lens by
(1) putting the received light amount adjuster into a state where the received light amount adjuster completely blocks light, (2) causing the light source to emit light, and (3) setting a multiplication factor of the light receiving element to an optimum value, are not less than predetermined thresholds.

**6.** The electro-optical distance meter according to Claim 2, wherein

the optical noise is stored in the storage unit when an average amplitude and an initial phase of a noise signal obtained from the noise signal measured under
the condition (0) that the reflected distance measuring light does not enter the objective lens by
(1) putting the received light amount adjuster into a state where the received light amount adjuster completely blocks light, (2) causing the light source to emit light, and (3) setting a multiplication factor of the light receiving element to an optimum value, are less than predetermined thresholds.

**7.** The electro-optical distance meter according to Claim 6, wherein

the arithmetic control unit determines that performance of the electro-optical distance meter is defective and issues a warning when the average amplitude and the initial phase of the noise signal obtained from the noise signal measured under
the condition (0) that the reflected distance measuring light does not enter the objective lens by
(1) putting the received light amount adjuster into a state where the received light amount adjuster completely blocks light, (2) causing the light source to emit light, and (3) setting a multiplication factor of the light receiving element to an optimum value, are not less than predetermined thresholds.

**8.** A distance calculation method using an electro-optical distance meter including:

a light source configured to emit distance-measuring light to a measuring object;
a light receiving unit including a light receiving element configured to receive the distance-measuring light reflected by the measuring object and convert the received distance-measuring light into a distance-measuring signal, and a received light amount adjuster configured to adjust a light amount entering the light receiving element;

an objective lens configured to condense the reflected distance-measuring light to the light receiving unit;

an arithmetic control unit configured to calculate a distance to the measuring object from an initial phase of the distance-measuring signal; and

a storage unit configured to store the distance-measuring signal and distance value data, wherein

before a distance measurement, the arithmetic control unit stores an average amplitude and an initial phase obtained by measuring a noise signal by (1) putting the received light amount adjuster into a state where the received light amount adjuster completely blocks light, (2) causing the light source to emit light, and (3) setting a multiplication factor of the light receiving element to an optimum value, as electrical noise in the storage unit, and

at the time of the distance measurement, the arithmetic control unit subtracts the electrical noise and optical noise stored in advance as an average amplitude and an initial phase in the storage unit from the measured distance-measuring signal to obtain a true distance-measuring signal, and calculates a distance to the measuring object based on an initial phase of the true distance-measuring signal.

9. The distance calculation method, according to Claim 8, Wherein the optical noise is obtained by subtracting,

from a noise signal measured under

the condition (0) that the reflected distance measuring light does not enter the objective lens by

(1a) putting the received light amount adjuster into a state where the received light amount adjuster transmits light most, (2) causing the light source to emit light, and (3) setting a multiplication factor of the light receiving element to an optimum value,

a noise signal measured under

the same condition (0) that the reflected distance measuring light does not enter the objective lens by

(1) putting the received light amount adjuster into a state where the received light amount adjuster completely blocks light, (2) causing the light source to emit light, and (3) setting a multiplication factor of the light receiving element to an optimum value.

10. The distance calculation method, according to Claim 9, wherein

the condition that the reflected distance-measuring light does not enter the objective lens is to emit distance-measuring light toward the night sky without obstacles.

11. The distance calculation method according to Claim 9, wherein

the optical noise is stored in the storage unit when an average amplitude and an initial phase of a noise signal obtained by subtracting,

from a noise signal measured under

the condition (0) that the reflected distance measuring light does not enter the objective lens by

(1a) putting the received light amount adjuster into a state where the received light amount adjuster transmits light most, (2) causing the light source to emit light, and (3) setting a multiplication factor of the light receiving element to an optimum value,

a noise signal measured under

the same condition (0) that the reflected distance measuring light does not enter the objective lens by

(1) putting the received light amount adjuster into a state where the received light amount adjuster completely blocks light, (2) causing the light source to emit light, and (3) setting a multiplication factor of the light receiving element to an optimum value, are less than predetermined thresholds.

12. The distance calculation method according to Claim 11, wherein

the arithmetic control unit determines that performance of the electro-optical distance meter is defective and issues a warning when the average amplitude and the initial phase of the noise signal obtained by subtracting,

from the noise signal measured under

the condition (0) that the reflected distance measuring light does not enter the objective lens by

(1a) putting the received light amount adjuster into a state where the received light amount adjuster transmits light most, (2) causing the light source to emit light, and (3) setting a multiplication factor of the light receiving element to an optimum value,

the noise signal measured under

the same condition (0) that the reflected distance measuring light does not enter the objective lens by

(1) putting the received light amount adjuster into a state where the received light amount adjuster completely blocks light, (2) causing the light source to emit light, and (3) setting a multiplication factor of the light receiving element to an optimum value, are not less than predetermined thresholds.

13. The distance calculation method according to Claim 9, wherein

the optical noise is stored in the storage unit when an average amplitude and an initial phase of a noise signal obtained from the noise signal measured under

the condition (0) that the reflected distance measuring light does not enter the objective lens by

(1) putting the received light amount adjuster into a state where the received light amount adjuster completely blocks light, (2) causing the light source to emit light, and (3) setting a multiplication factor of the light receiving element to an optimum value, are less than predetermined thresholds.

14. The distance calculation method according to Claim 13, wherein

the arithmetic control unit determines that performance of the electro-optical distance meter is defective and issues a warning when the average amplitude and the initial phase of the noise signal obtained from the noise signal measured under

the condition (0) that the reflected distance measuring light does not enter the objective lens by

(1) putting the received light amount adjuster into a state where the received light amount adjuster completely blocks light, (2) causing the light source to emit light, and (3) setting a multiplication factor of the light receiving element to an optimum value, are not less than predetermined thresholds.

100

L

70 60

Light transmitting unit 10

11 K₁
12 K
13

Light source

Modulator

Reference signal oscillator

R

P P

50

Storage unit

Optical noise IR

40

Received light amount adjuster 21A

Light receiving unit

Arithmetic control unit

21

Received light amount adjuster

22

Light receiv-ing element

23

24

Bandpass filter

25

Frequency converter

26

Low-pass filter

27

IF

M

A/D converter

30

20

FIG. 1

14

FIG. 2

FIG. 3A

FIG. 3B

Optical noise $\overrightarrow{IR}$
(instrument internal noise)

Measured noise $\overrightarrow{N}_I$

Actually measured
distance-measuring signal $\overrightarrow{M}$

Electrical noise $\overrightarrow{EL}$
(measured noise $\overrightarrow{N}_{II}$)

True distance-
measuring signal $\overrightarrow{M}_T$

# FIG. 4

100

60

L

11

Light source

La

21

21c

21b

× → Light receiving element
EL

22

## FIG. 5A

100

60

L

11

Light source

La

21

21b

21c

→ Light receiving element
EL
IR

22

Night sky
←

## FIG. 5B

True distance
-measuring signal $\vec{M}_T$

Measured noise $\vec{N}_{II}$

Optical noise $\vec{IR}$

$a_{II}$

$a_{EL}$

$a_{IR}$

$a_{II}sin(\eta_{II})$

$\eta_{IR}$

$\beta$

$\eta_{II}$

Measured noise $\vec{N}_I$
(electrical noise $\vec{EL}$)

$a_I \; sin(\eta_I \;)$

$\eta_I$

$a_I \; cos(\eta_I)$

$a_{II}cos(\eta_{II})$

# FIG. 6

Start

Measure noise signal $N_I$ in a state where
(0) Reflected distance-measuring light is not allowed to enter under
[Condition I]
(1) Light is blocked most
(2) Light source emits light
(3) Multiplication factor is optimum — S01

Calculate amplitude $a_I$ and initial phase $\eta_I$ of noise signal $N_I$ — S02

Measure noise signal NII in a state where
(0) Reflected distance-measuring light is not allowed to enter under
[Condition II]
(1a) Light is transmitted most
(2) Light source emits light
(3) Multiplication factor is optimum — S03

Calculate amplitude $a_{II}$ and initial phase $\eta_{II}$ of noise signal $N_{II}$ — S04

Calculate and store amplitude $a_{IR}$ and initial phase $\eta_{IR}$ of optical noise IR — S05

End

# FIG. 7

```
        ┌─────────┐
        │  Start  │
        └────┬────┘
             │
   ┌─────────┴──────────────────────────┐
   │ Measure noise signal N_I under      │  ~S11
   │ [Condition I]                       │
   │ (1) Light is blocked most           │
   │ (2) Distance-measuring light is emitted │
   │ (3) Multiplication factor is optimum │
   └─────────┬──────────────────────────┘
             │
   ┌─────────┴──────────────────────────┐
   │ Calculate amplitude a_I and initial phase η_I │  ~S12
   │ of noise signal N_I (electrical noise signal EL) │
   └─────────┬──────────────────────────┘
             │
   ┌─────────┴──────────────────────────┐
   │          Measure distance           │  ~S13
   └─────────┬──────────────────────────┘
             │
 ┌───────────┴────────────────────────────────────────────┐
 │ Calculate initial phase β_T from which noises have been removed │  ~S14
 └───────────┬────────────────────────────────────────────┘
             │
   ┌─────────┴──────────────────────────┐
   │          Calculate distance         │  ~S15
   └─────────┬──────────────────────────┘
             │
        ┌────┴────┐
        │   End   │
        └─────────┘
```

# FIG. 8

Start

Measure noise signal $N_I$ in a state where
(0) Reflected distance-measuring light is not allowed to enter under
[Condition I]
(1) Light is blocked most
(2) Light source emits light
(3) Multiplication factor is optimum — S101

Calculate amplitude $a_I$ and initial phase $\eta_I$ of noise signal $N_I$ — S102

Measure noise signal $N_{II}$ in a state where
(0) Reflected distance-measuring light is not allowed to enter under
[Condition II]
(1a) Light is transmitted most
(2) Light source emits light
(3) Multiplication factor is optimum — S103

Calculate amplitude $a_{II}$ and initial phase $\eta_{II}$ of noise signal $N_{II}$ — S104

Calculate amplitude $a_{IR}$ and initial phase $\eta_{IR}$ of optical noise IR — S105

No — Are $a_I$ $(a_{EL})$ and $\eta_I$ $(\eta_{EL})$ less than thresholds? — S106

Yes

No — Are $a_{IR}$ and $\eta_{IR}$ less than thresholds? — S107

Warning for defective performance — S109

Yes

Store amplitude $a_{IR}$ and initial phase $\eta_{IR}$ of optical noise IR — S108

End

FIG. 9

| | Europäisches Patentamt European Patent Office Office européen des brevets | **EUROPEAN SEARCH REPORT** | Application Number EP 22 15 2885 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2009 258006 A (SOKKIA TOPCON CO LTD) 5 November 2009 (2009-11-05) | 1,2,4,6, 8,9,11, 13 | INV. G01S17/36 G01S7/4915 |
| Y | * paragraphs [0004] – [0007], [0025] – [0035]; claim 1 * | 3,5,7, 10,12,14 | G01S7/497 G01S7/493 G01S7/4912 |
| Y | US 2016/161610 A1 (HIROMI ITARU [US]) 9 June 2016 (2016-06-09) * paragraphs [0052], [0062] * | 3,10 | |
| Y | US 2015/309164 A1 (CHO JEONG-HO [KR] ET AL) 29 October 2015 (2015-10-29) * paragraph [0075] * | 5,7,12, 14 | |

TECHNICAL FIELDS SEARCHED (IPC)

G01S

The present search report has been drawn up for all claims

| Place of search | Date of completion of the search | Examiner |
|---|---|---|
| Munich | 3 June 2022 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 2885

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2022

| Patent document cited in search report | | Publication date | Patent family member(s) | | Publication date |
|---|---|---|---|---|---|
| JP 2009258006 | A | 05-11-2009 | NONE | | |
| US 2016161610 | A1 | 09-06-2016 | CN | 105699955 A | 22-06-2016 |
| | | | TW | 201621347 A | 16-06-2016 |
| | | | US | 2016161610 A1 | 09-06-2016 |
| US 2015309164 | A1 | 29-10-2015 | KR | 20150122476 A | 02-11-2015 |
| | | | US | 2015309164 A1 | 29-10-2015 |

EPO FORM P0459

For more details about this annex : see Official Journal of the European Patent Office, No. 12/82

**EP 4 036 603 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009258006 A